(19) Europäisches Patentamt / European Patent Office / Office européen des brevets

(11) **EP 3 811 532 B1**

(12) **FASCICULE DE BREVET EUROPEEN**

(45) Date de publication et mention
de la délivrance du brevet:
**24.05.2023 Bulletin 2023/21**

(21) Numéro de dépôt: **19742874.1**

(22) Date de dépôt: **21.06.2019**

(51) Classification Internationale des Brevets (IPC):
**H04B 17/373** *(2015.01)* **H04L 25/02** *(2006.01)*
**H04W 84/00** *(2009.01)* **H04W 64/00** *(2009.01)*

(52) Classification Coopérative des Brevets (CPC):
**H04B 17/373; H04L 25/0204; H04L 25/0212;**
H04W 64/006; H04W 84/005

(86) Numéro de dépôt international:
**PCT/FR2019/051526**

(87) Numéro de publication internationale:
**WO 2020/002803 (02.01.2020 Gazette 2020/01)**

(54) **PROCÉDÉ ET ENTITÉ DE RÉSEAU POUR LA PRÉDICTION DU CANAL ENTRE UN ÉMETTEUR/RÉCEPTEUR ET UN VÉHICULE CONNECTÉ**

VERFAHREN UND NETZWERKEINHEIT ZUM VORHERSAGEN DES KANALS ZWISCHEN EINEM SENDER-EMPFÄNGER UND EINEM ANGESCHLOSSENEN FAHRZEUG

METHOD AND NETWORK ENTITY FOR PREDICTING THE CHANNEL BETWEEN A TRANSMITTER/RECEIVER AND A CONNECTED VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2018 FR 1855669**

(43) Date de publication de la demande:
**28.04.2021 Bulletin 2021/17**

(73) Titulaire: **Orange**
**92130 Issy-les-Moulineaux (FR)**

(72) Inventeurs:
• **BJORSELL, Joachim**
**92326 CEDEX CHÂTILLON CEDEX (FR)**
• **STERNAD, Mikael**
**92326 CHÂTILLON CEDEX (FR)**

(56) Documents cités:
• **BJORSELL JOACHIM ET AL: "Predictor antennas in action", 2017 IEEE 28TH ANNUAL INTERNATIONAL SYMPOSIUM ON PERSONAL, INDOOR, AND MOBILE RADIO COMMUNICATIONS (PIMRC), IEEE, 8 octobre 2017 (2017-10-08), pages 1-7, XP033321130, DOI: 10.1109/PIMRC.2017.8292235 ISBN: 978-1-5386-3529-2 [extrait le 2018-02-14] cité dans la demande**
• **BJORSELL JOACHIM ET AL: "Using predictor antennas for the prediction of small-scale fading provides an order-of-magnitude improvement of prediction horizons", 2017 IEEE INTERNATIONAL CONFERENCE ON COMMUNICATIONS WORKSHOPS (ICC WORKSHOPS), IEEE, 21 mai 2017 (2017-05-21), pages 54-60, XP033111445, DOI: 10.1109/ICCW.2017.7962633**

**Description**

Le domaine de l'invention est celui des communications radio entre objets communicants en déplacement relatif.

Plus particulièrement, la présente invention concerne les communications radio entre une entité réseau comprenant un émetteur/récepteur, telle qu'une station de base, et un véhicule connecté en mouvement.

De manière générale, un signal radio transmis par une antenne d'une entité communicante, dit signal d'antenne, subit des déformations en fonction des conditions de propagation entre un point d'origine défini en sortie de l'antenne d'origine et un point destinataire défini en entrée d'une antenne de l'entité communicante destinataire. Afin de corriger ces déformations, le signal d'antenne est préalablement distordu par application de coefficients de pré-égalisation en fonction des caractéristiques du canal de propagation entre ces deux antennes. Il est donc nécessaire de caractériser ce canal de propagation.

Les estimations d'un canal de communication radio sont généralement obtenues en faisant envoyer, par l'une des entités communicantes, des signaux de référence connus, en enregistrant les signaux reçus par l'autre entité communicante, et en calculant ensuite une estimation du canal à l'instant et pour la fréquence du signal de référence. Par exemple, dans les systèmes de communication utilisant la modulation OFDM (initiales des mots anglais « *Orthogonal Frequency Division Multiplexing* » signifiant « Multiplexage de Fréquences Orthogonales »), les estimations de canal prennent la forme de gains complexes pour chaque sous-porteuse du symbole OFDM sur laquelle les signaux de référence ont été transmis.

La nécessité d'estimer le canal de communication radio est par exemple cruciale dans le domaine des véhicules connectés. En effet, les communications avec un nombre croissant de véhicules connectés, notamment des véhicules de transport en commun, deviendront très coûteuses en termes de puissance et de largeur de bande, à moins que l'on n'utilise des procédés de communication avancés. Ceux-ci s'appuieront sur des estimations de canal au niveau de l'émetteur (« *Channel State Information at the Transmitter* », ou CSIT en anglais).

Un premier problème lié aux communications avec des véhicules connectés concerne les pertes de puissance au cours de la pénétration des ondes de l'extérieur vers l'intérieur du véhicule ; en pratique, ces pertes affectent les performances du système de manière importante. Plus précisément, des mesures ont montré que les pertes de pénétration dans un véhicule peuvent être aussi élevées que 25 dB pour un équipement d'usager recevant des ondes de fréquence 2,4 GHz à l'intérieur d'une camionnette. On prévoit des pertes encore plus importantes pour des fréquences plus hautes, par exemple, pour les bandes autour de 3,5 GHz allouées aux systèmes de communication mobiles de nouvelle génération, et pour certains véhicules bien isolés vis-à-vis des ondes électromagnétiques.

Pour résoudre ce premier problème, il a été proposé (cf. l'article de Y. Sui, A. Papadogiannis et T. Svensson intitulé « The Potential of Moving Relays - A performance Analysis », IEEE Vehicular Technology Conférence, Yokohama, mai 2012) d'équiper le véhicule, par exemple un autobus ou un tramway, d'un relais mobile situé à l'extérieur du véhicule. Ce relais mobile utilise une antenne extérieure (typiquement, sur le toit du véhicule), qui est reliée à une antenne située à l'intérieur du véhicule. L'antenne extérieure communique avec la station de base (lien « *backhaul* » en anglais), tandis que l'antenne intérieure communique avec les dispositifs d'utilisateur au moyen d'un réseau de communication local (par exemple un réseau WiFi). L'efficacité d'un tel système de communication repose alors sur les performances et la fiabilité de la liaison entre le relais et la station de base.

Un deuxième problème lié aux communications avec des véhicules connectés est que le canal varie en fonction de la position de l'antenne extérieure. Après qu'une antenne extérieure du véhicule a émis un signal de référence, la station de base émet un signal utile pré-égalisé sur la base de l'estimation de canal avec un certain délai de traitement $\vartheta$ (de l'ordre de 5 ms dans le cas des systèmes LTE (Long Term Evolution) par exemple) ; or, pendant ce délai, le véhicule s'est déplacé, de sorte que le canal entre la station de base et l'antenne extérieure n'est plus le même que lors de l'émission du signal de référence. On peut néanmoins, dans l'état de l'art, pré-égaliser le signal utile en vue d'un déplacement donné D de l'antenne du véhicule, et ce, jusqu'à un certain maximum $D_{max}$ (typiquement, de l'ordre de 0,3 longueurs d'onde de porteuse), sur la base des estimations de canal présente et antérieures et en prenant en compte le phénomène classique d'évanouissement rapide (« *fast-fading* » en anglais), c'est-à-dire les variations de l'amplitude du signal reçu causées par les réflexions des ondes électromagnétiques sur des objets proches du récepteur. Malheureusement, aux vitesses habituelles en zone urbaine (de l'ordre de 50 km/h) et aux fréquences de porteuses habituelles (de l'ordre du GHz), le véhicule se déplace en $\vartheta$ sur une distance supérieure audit maximum $D_{max}$.

Pour résoudre ce deuxième problème, il a été proposé un procédé dit « d'Antenne Prédictive » (cf. l'article de M. Sternad, M. Grieger, R. Apelfröjd, T. Svensson, D. Aronsson et A. Belén Martinez intitulé « Using predictor antennas for long-range prédiction of fast fading for moving relays », IEEE Wireless Communications and Networking Conférence, Paris, avril 2012), qui utilise à l'extérieur du véhicule une antenne supplémentaire, dite « antenne prédictive » ; cette antenne prédictive est placée devant l'antenne extérieure (dite « antenne principale ») destinée aux échanges de données utiles (« *payload* » en anglais) avec la station de base. L'estimation du canal radio en bande de base à la position actuelle de l'antenne prédictive permet de prédire les canaux qui concerneront l'antenne principale (placée donc à l'arrière de l'antenne prédictive) quand l'antenne principale atteindra la position actuelle de l'antenne prédictive.

Le procédé d'Antenne Prédictive permet ainsi, avantageusement, de prédire des estimations de canal sur des durées qui sont un ordre de grandeur supérieur à celles applicables sur la base de l'extrapolation de mesures de canal effectuées dans le passé. Ce procédé est donc du plus grand intérêt pour l'application aux véhicules connectés servis par une infrastructure radio avancée.

Pour le traitement du signal, comme pour l'évaluation d'un modèle statistique de l'évolution du canal en temps et en fréquence, ainsi que pour la prédiction de canal, il est fortement souhaitable de disposer d'une série d'échantillons temporels qui soient régulièrement espacés dans le temps. C'est en particulier le cas pour le procédé d'Antenne Prédictive. Or le positionnement des signaux de référence par rapport au temps, à la fréquence et au port d'antenne est déterminé par la norme de communication utilisée, et par des choix de mise en oeuvre. Malheureusement, dans nombre de systèmes de communication, ce positionnement n'est pas régulier dans le temps. C'est le cas en particulier pour les transmissions en Duplex par Séparation dans le Temps (« *Time-Division Duplex* », ou TDD en anglais), où l'estimation par la station de base des canaux sur la voie montante (« *uplink* » en anglais) en utilisant des signaux de référence également sur la voie montante est interrompue par des intervalles de transmission sur la voie descendante (« *downlink* » en anglais), pendant lesquels la station de base ne dispose d'aucun signal de référence. Il est donc nécessaire, dans ces systèmes de communication, de mettre en oeuvre une méthode d'interpolation pour obtenir, à partir de séries d'estimations de canal espacées de manière irrégulière dans le temps, une série d'estimations de canal situées dans le temps conformément aux besoins, par exemple régulièrement espacées dans le temps.

Pour ce faire, on peut par exemple utiliser l'algorithme décrit dans l'article de J. Björsell, M. Sternad et M. Grieger intitulé « Predictor Antennas in Action » (IEEE International Symposium on Personal, Indoor and Mobile Radio Communications, Montréal, octobre 2017). Cet algorithme réalise une interpolation et un filtrage du bruit sur des mesures effectuées sur la base de signaux apériodiques utilisés comme signaux de référence.

Supposons ici pour simplifier que l'on utilise une unique antenne prédictive, ainsi qu'une unique antenne principale (pour les échanges de données utiles avec la station de base). Selon cet algorithme, la valeur que prendra le canal scalaire complexe $h_m$ vu par l'antenne principale $\tau$ secondes plus tard est prédite en multipliant le canal $h_p$ vu par l'antenne prédictive, estimé précédemment et convenablement retardé, par un coefficient à valeurs complexes $a_h$ selon l'équation suivante :

$$\hat{h}_m(t + \tau) = a_h \hat{h}_p(t + \tau - \Delta t), \qquad\qquad (1)$$

où $t$ est l'instant courant, $\hat{h}_p(t + \tau - \Delta t)$ est une estimation de $h_p$ obtenue à partir de mesures bruitées effectuées avant l'instant $t$, et $\Delta t$ est le décalage temporel entre les passages de l'antenne prédictive et de l'antenne principale par la même position.

L'algorithme comprend deux parties inter-opérant l'une avec l'autre : une partie qui opère avec une échelle temporelle longue, dite « partie d'échelle longue », et une partie qui opère avec une échelle temporelle courte, dite « partie d'échelle courte ». La partie d'échelle courte génère une nouvelle prédiction à des intervalles temporels successifs dits « intervalles de prédiction », avec une période courte. La partie d'échelle longue génère des paramètres à des intervalles temporels successifs avec une période longue, multiple de la période courte.

La partie d'échelle longue estime le coefficient $a_h$ et la vitesse $v$ du véhicule à partir de mesures de canal, mises en mémoire tampon, effectuées au niveau de l'antenne prédictive et de l'antenne principale. Plus précisément, le coefficient $a_h$ est évalué à partir de la corrélation maximale entre des échantillons mesurés au niveau des deux antennes, et la vitesse $v$ est déterminée à partir de la valeur du décalage temporel entre les antennes qui maximise la corrélation entre les antennes (la distance entre les antennes étant connue à l'avance). Autrement dit, la vitesse du véhicule est déterminée indirectement au moyen d'une recherche intensive : on calcule toutes les combinaisons possibles d'appariements entre les échantillons mesurés au niveau de l'antenne prédictive et de l'antenne principale, afin de trouver l'appariement qui fournit la plus grande corrélation.

En conséquence, un troisième problème lié aux communications avec des véhicules connectés est qu'une erreur dans la détermination de la vitesse peut résulter en un appairage incorrect entre les échantillons, ce qui à son tour réduit les performances des prédictions de canal. De plus, la taille des effets causés par de telles erreurs est inconnue, ce qui signifie que l'exactitude de la détermination de la vitesse du véhicule obtenue selon l'art antérieur est elle aussi inconnue.

La présente invention concerne donc, selon un premier aspect, un procédé selon la revendication 1.

On notera que ledit critère peut, par exemple, être l'optimisation d'un coefficient de corrélation entre une série d'échantillons mesurés au niveau de l'antenne principale et une série d'échantillons mesurés au niveau de l'antenne prédictive, ou l'optimisation de la grandeur $a_h$ mentionnée ci-dessus dans l'équation (1).

Ainsi, la présente invention permet l'estimation du mouvement d'un véhicule muni d'au moins une antenne principale et d'au moins une antenne prédictive par rapport à un émetteur/récepteur, c'est-à-dire l'estimation conjointe de la vitesse et de l'accélération dudit véhicule.

Grâce à ces dispositions, on améliore l'exactitude de la détermination de la vitesse du véhicule, et par suite la fiabilité des estimations de canal, notamment dans le cas d'un véhicule se déplaçant à une vitesse variable. En effet, de bonnes évaluations de la vitesse et de l'accélération du véhicule augmentent l'exactitude de la prédiction de canal en augmentant l'exactitude de l'identification dans le temps de l'échantillon mesuré au niveau de l'antenne de prédiction qui correspond à un horizon de prédiction donné pour l'antenne principale.

On notera que les estimations selon l'invention sont, avantageusement, obtenues ici sans faire appel à des mesures de vitesse externe, qui seraient effectuées, par exemple, à l'aide de tachymètres ou d'un GPS (Global Positioning System). Cette caractéristique simplifie la mise en oeuvre du procédé d'Antenne Prédictive dans les véhicules connectés.

Selon des caractéristiques particulières, ledit procédé comprend, pour au moins une paire de multiplets comprenant un multiplet

$$\boldsymbol{h}_m = [h_m(0), ..., h_m(N-1)]$$

de $N$ échantillons $hm(k)$ mesurés au niveau de l'antenne principale, et un multiplet

$$\boldsymbol{h}_p = \left[h_p(0), ..., h_p(N-1)\right]$$

de $N$ échantillons $h_p(k)$ mesurés au niveau de l'antenne prédictive, les étapes suivantes :

- on choisit un entier $X > 1$, et l'on subdivise chaque multiplet $\boldsymbol{h}_m$ et $\boldsymbol{h}_p$ en $X$ sous-multiplets comprenant chacun $N_x = N/X$ échantillons, de manière à obtenir les paires de sous-multiplets

$$\boldsymbol{h}_{m,i} = \left[h_m\big((i-1)N_x\big), ..., h_m(iN_x - 1)\right]$$

et

$$\boldsymbol{h}_{p,i} = \left[h_p\big((i-1)N_x\big), ..., h_p(iN_x - 1)\right],$$

où $i = \{1, ..., X\}$,

- on retire les $k_0$ premiers échantillons de chaque sous-multiplet $\boldsymbol{h}_{m,i}$ et les $k_0$ derniers échantillons de chaque sous-multiplet $\boldsymbol{h}_{p,i}$, où $k_0$ est le nombre d'échantillons mesurés pendant le temps que cela prend pour l'antenne principale pour atteindre la position de l'antenne prédictive, sur la base d'une conjecture initiale de la vitesse et de l'accélération du véhicule,
- on estime la vitesse moyenne pour chaque paire de sous-multiplets en maximisant la corrélation entre les sous-multiplets de cette paire,
- on obtient le multiplet de vitesses $\boldsymbol{v} = \{v_{i=1}, ..., v_{i=X}\}$ représentant les vitesses estimées pour les échantillons numérotés

$$k = \{N_x/2, 3N_x/2, ..., (2X-1)N_x/2\},$$

et

- on obtient, à partir dudit multiplet de vitesses v, une accélération estimée $a_{c,est}$ et une vitesse estimée $v_{0,est}$ du véhicule, où $v_{0,est}$ est égale à la vitesse estimée du véhicule à l'instant de la mesure de l'échantillon $k = 0$.

Ce premier mode de réalisation présente l'avantage d'être relativement simple à mettre en oeuvre.

Selon d'autres caractéristiques particulières, ledit procédé comprend, pour au moins une paire de multiplets comprenant un multiplet

$$\boldsymbol{h}_m = [h_m(0), ..., h_m(N-1)]$$

de $N$ échantillons $h_m(k)$ mesurés au niveau de l'antenne principale, et un multiplet

$$\boldsymbol{h}_p = \big[h_p(0), \ldots, h_p(N-1)\big]$$

de $N$ échantillons $h_p(k)$ mesurés au niveau de l'antenne prédictive, les étapes suivantes :

- on retire les $k_0$ premiers échantillons mesurés au niveau de l'antenne principale et les $k_0$ derniers échantillons mesurés au niveau de l'antenne prédictive, où $k_0$ est le nombre d'échantillons mesurés pendant le temps que cela prend pour l'antenne principale pour atteindre la position de l'antenne prédictive, sur la base d'une conjecture initiale de la vitesse et de l'accélération du véhicule, de manière à obtenir les multiplets d'échantillons

$$\boldsymbol{h}'_m = \big[h_m(k_0), \ldots, h_m(N-1)\big]$$

et

$$\boldsymbol{h}'_p = \big[h_p(0), \ldots, h_p(N-1-k_0)\big],$$

- on choisit un entier $X > 1$, et l'on subdivise chaque multiplet $\boldsymbol{h}'_m$ et $\boldsymbol{h}'_p$ en $X$ sous-multiplets de $N_x = (N - k_0)/X$ échantillons, de manière à obtenir les paires de sous-multiplets

$$\boldsymbol{h}'_{m,i} = \big[h_m(k_0 + (i-1)N_x), \ldots, h_m(k_0 + iN_x - 1)\big]$$

et

$$\boldsymbol{h}'_{p,i} = \big[h_p\big((i-1)N_x\big), \ldots, h_p(iN_x - 1)\big],$$

où $i = \{1, \ldots, X\}$,
- on estime, pour chaque telle paire de sous-multiplets, la vitesse moyenne en maximisant la corrélation entre les sous-multiplets de cette paire, de manière à obtenir une suite de vitesses estimées $\boldsymbol{v} = \{v_{i=1}, \ldots, v_{i=X}\}$ représentant les vitesses estimées pour les échantillons numérotés

$$k = \{(k_0 + N_x)/2, (k_0 + 3N_x)/2, \ldots, (k_0 + (2X-1)N_x)/2\},$$

- on obtient, à partir de ces estimations de vitesse $\boldsymbol{v}$, une accélération estimée $a_c = a_{c,est}$ et une vitesse estimée $v_{0,est}$ du véhicule, et on en déduit la vitesse estimée

$$v_0 = v_{avg,init} + v_{0,est}$$

du véhicule à l'instant de la mesure de l'échantillon $k = 0$, où $v_{avg,init}$ est la vitesse moyenne conjecturée sur l'intervalle de temps pendant lequel les $N$ échantillons sont mesurés.

Ce deuxième mode de réalisation présente l'avantage de fournir de meilleures estimations que le premier mode, notamment pour des multiplets de grande taille (c'est-à-dire utilisant de longues séries de mesures), mais au prix de calculs légèrement plus complexes que le premier mode.

Selon encore d'autres caractéristiques particulières, ledit procédé comprend les étapes suivantes :

- on calcule l'intervalle temporel $\Delta^+(t)$ représentant le temps qu'il faudra à l'antenne principale pour atteindre l'endroit où se trouve l'antenne prédictive à l'instant $t$,
- on calcule l'intervalle temporel $\Delta^-(t)$ représentant le temps écoulé depuis que l'antenne prédictive se trouvait à l'endroit où se trouve l'antenne principale à l'instant $t$,

- on en déduit les décalages $\Delta_k^+(k)$ et $\Delta_k^-(k)$ en termes de numéros d'échantillons $k$ correspondant respectivement à $\Delta^+(t)$ et $\Delta^-(t)$,

- on supprime, dans un multiplet de $N$ échantillons mesurés au niveau de l'antenne principale, les échantillons de numéro inférieur à $k_0 = \Delta_k^+(0)$,

- pour diverses paires conjecturées $(v_0, a_c)$, on détermine, au moyen des valeurs de $\Delta^+(t)$, $\Delta^-(t)$, $\Delta_k^+(k)$ et $\Delta_k^-(k)$, quels échantillons mesurés au niveau de l'antenne principale doivent être associés à quels échantillons mesurés au niveau de l'antenne prédictive, et l'on calcule la corrélation moyenne entre un multiplet d'échantillons mesurés au niveau de l'antenne principale et le multiplet associé d'échantillons mesurés au niveau de l'antenne prédictive, et

- l'on détermine quelle paire $(v_0, a_c)$ maximise ladite corrélation moyenne.

Ce troisième mode de réalisation présente l'avantage de fournir des estimations encore meilleures que les deux premiers modes, mais au prix de calculs plus complexes.

Corrélativement, selon un deuxième aspect, l'invention concerne une entité réseau selon la revendication 5.

Cette entité réseau pourra avantageusement être hébergée dans un noeud de réseau physique, ou bien virtuel (dans le « *cloud* »), chargé de gérer les transmissions *downlink,* par exemple dans une station de base ou un MSC (« *mobile switching center* ») d'un réseau de communication cellulaire.

Selon des caractéristiques particulières, ladite entité réseau comprend en outre, pour au moins une paire de multiplets comprenant un multiplet

$$\boldsymbol{h}_m = [h_m(0), \dots, h_m(N-1)]$$

de $N$ échantillons $h_m(k)$ mesurés au niveau de l'antenne principale, et un multiplet

$$\boldsymbol{h}_p = \big[h_p(0), \dots, h_p(N-1)\big]$$

de $N$ échantillons $h_p(k)$ mesurés au niveau de l'antenne prédictive, des moyens pour :

- choisir un entier $X > 1$, et subdiviser chaque multiplet $\boldsymbol{h}_m$ et $\boldsymbol{h}_p$ en $X$ sous-multiplets comprenant chacun $N_x = N/X$ échantillons, de manière à obtenir les paires de sous-multiplets

$$\boldsymbol{h}_{m,i} = \big[h_m\big((i-1)N_x\big), \dots, h_m(iN_x - 1)\big]$$

et

$$\boldsymbol{h}_{p,i} = \big[h_p\big((i-1)N_x\big), \dots, h_p(iN_x - 1)\big],$$

où $i = \{1, \dots, X\}$,

- retirer les $k_0$ premiers échantillons de chaque sous-multiplet $\boldsymbol{h}_{m,i}$ et les $k_0$ derniers échantillons de chaque sous-multiplet $\boldsymbol{h}_{p,i}$, où $k_0$ est le nombre d'échantillons mesurés pendant le temps que cela prend pour l'antenne principale pour atteindre la position de l'antenne prédictive, sur la base d'une conjecture initiale de la vitesse et de l'accélération du véhicule,

- estimer la vitesse moyenne pour chaque paire de sous-multiplets en maximisant la corrélation entre les sous-multiplets de cette paire,

- obtenir le multiplet de vitesses $\boldsymbol{v} = \{v_{i=1}, \dots, v_{i=X}\}$ représentant les vitesses estimées pour les échantillons numérotés

$$k = \{N_x/2, 3N_x/2, \dots, (2X-1)N_x/2\},$$

et

- obtenir, à partir dudit multiplet de vitesses $\boldsymbol{v}$, une accélération estimée $a_{c,est}$ et une vitesse estimée $v_{0,est}$ du véhicule, où $v_{0,est}$ est égale à la vitesse estimée du véhicule à l'instant de la mesure de l'échantillon $k = 0$.

Selon d'autres caractéristiques particulières, ladite entité réseau comprend en outre, pour au moins une paire de multiplets comprenant un multiplet

$$\boldsymbol{h}_m = [h_m(0), \dots, h_m(N-1)]$$

de $N$ échantillons $h_m(k)$ mesurés au niveau de l'antenne principale, et un multiplet

$$\boldsymbol{h}_p = [h_p(0), \dots, h_p(N-1)]$$

de $N$ échantillons $h_p(k)$ mesurés au niveau de l'antenne prédictive, des moyens pour :

- retirer les $k_0$ premiers échantillons mesurés au niveau de l'antenne principale et les $k_0$ derniers échantillons mesurés au niveau de l'antenne prédictive, où $k_0$ est le nombre d'échantillons mesurés pendant le temps que cela prend pour l'antenne principale pour atteindre la position de l'antenne prédictive, sur la base d'une conjecture initiale de la vitesse et de l'accélération du véhicule, de manière à obtenir les multiplets d'échantillons

$$\boldsymbol{h'}_m = [h_m(k_0), \dots, h_m(N-1)]$$

et

$$\boldsymbol{h'}_p = [h_p(0), \dots, h_p(N-1-k_0)],$$

- choisir un entier $X > 1$, et subdiviser chaque multiplet $\boldsymbol{h'}_m$ et $\boldsymbol{h'}_p$ en $X$ sous-multiplets de $N_x = (N - k_0)/X$ échantillons, de manière à obtenir les paires de sous-multiplets

$$\boldsymbol{h'}_{m,i} = [h_m(k_0 + (i-1)N_x), \dots, h_m(k_0 + iN_x - 1)]$$

et

$$\boldsymbol{h'}_{p,i} = [h_p((i-1)N_x), \dots, h_p(iN_x - 1)],$$

où $i = \{1, \dots, X\}$,
- estimer, pour chaque telle paire de sous-multiplets, la vitesse moyenne en maximisant la corrélation entre les sous-multiplets de cette paire, de manière à obtenir une suite de vitesses estimées $\boldsymbol{v} = \{v_{i=1}, \dots, v_{i=X}\}$ représentant les vitesses estimées pour les échantillons numérotés

$$k = \{(k_0 + N_x)/2, (k_0 + 3N_x)/2, \dots, (k_0 + (2X - 1)N_x)/2\},$$

- obtenir, à partir de ces estimations de vitesse v, une accélération estimée $a_c = a_{c,est}$ et une vitesse estimée $v_{0,est}$ du véhicule, et
- en déduire la vitesse estimée

$$v_0 = v_{avg,init} + v_{0,est}$$

du véhicule à l'instant de la mesure de l'échantillon $k = 0$, où $v_{avg,init}$ est la vitesse moyenne conjecturée sur l'intervalle de temps pendant lequel les $N$ échantillons sont mesurés.

Selon encore d'autres caractéristiques particulières, ladite entité réseau comprend en outre des moyens pour :

- calculer l'intervalle temporel $\Delta^+(t)$ représentant le temps qu'il faudra à l'antenne principale pour atteindre l'endroit où se trouve l'antenne prédictive à l'instant $t$,
- calculer l'intervalle temporel $\Delta^-(t)$ représentant le temps écoulé depuis que l'antenne prédictive se trouvait à l'endroit où se trouve l'antenne principale à l'instant $t$,

- en déduire les décalages $\Delta_k^+(k)$ et $\Delta_k^-(k)$ en termes de numéros d'échantillons *k* correspondant respectivement à $\Delta^+(t)$ et $\Delta^-(t)$,
- supprimer, dans un multiplet de *N* échantillons mesurés au niveau de l'antenne principale, les échantillons de numéro inférieur à $k_0 = \Delta_k^+(0)$,
- pour diverses paires conjecturées ($v_0$, $a_c$), déterminer, au moyen des valeurs de $\Delta^+(t)$, $\Delta^-(t)$, $\Delta_k^+(k)$ et $\Delta_k^-(k)$, quels échantillons mesurés au niveau de l'antenne principale doivent être associés à quels échantillons mesurés au niveau de l'antenne prédictive, et calculer la corrélation moyenne entre un multiplet d'échantillons mesurés au niveau de l'antenne principale et le multiplet associé d'échantillons mesurés au niveau de l'antenne prédictive, et
- déterminer quelle paire ($v_0$, $a_c$) maximise ladite corrélation moyenne.

Les avantages offerts par ces entités réseau sont essentiellement les mêmes que ceux offerts par les procédés corrélatifs succinctement exposés ci-dessus.

On notera qu'il est possible de réaliser ces entités réseau dans le contexte d'instructions logicielles et/ou dans le contexte de circuits électroniques.

Selon un troisième aspect, l'invention concerne un réseau de communication. Ledit réseau de communications est caractérisé en ce qu'il comprend :

- au moins une entité réseau telle que décrite succinctement ci-dessus, et
- au moins un véhicule équipé d'au moins une antenne principale et d'au moins une antenne prédictive.

Les avantages offerts par ce réseau de communication sont essentiellement les mêmes que ceux offerts par les procédés corrélatifs succinctement exposés ci-dessus.

L'invention vise également un programme d'ordinateur, selon la revendication 12, téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes du procédé de prédiction de canal succinctement exposé ci-dessus, lorsqu'il est exécuté sur un ordinateur.

Les avantages offerts par ce programme d'ordinateur sont essentiellement les mêmes que ceux offerts par ledit procédé.

D'autres aspects et avantages de l'invention apparaîtront à la lecture de la description détaillée ci-dessous de modes de réalisation particuliers, donnés à titre d'exemples non limitatifs.

Ces modes de réalisation mettent en oeuvre, dans le cadre d'un procédé d'Antenne Prédictive, les étapes principales suivantes.

a) En exploitant une fenêtre temporelle d'estimations de canal effectuées au niveau de l'antenne prédictive et de l'antenne principale, on estime la vitesse et l'accélération effectives du véhicule.

b) Une fois connue la vitesse du véhicule en fonction du temps, on peut déterminer, en prenant en compte la distance d entre les deux antennes, à quel instant précédent l'antenne prédictive se trouvait à la position actuelle de l'antenne principale ; on peut alors sélectionner, dans l'ensemble de mesures de canal effectuées dans le passé au niveau de l'antenne prédictive, celle qui a été effectuée à cet instant précédent.

Lorsqu'une station de base échange ensuite des données utiles avec l'antenne principale, le signal transportant ces données utiles sera avantageusement pré-égalisé au moyen de la mesure de canal qui a été effectuée par l'antenne prédictive à la position où se trouve actuellement l'antenne principale.

Si l'accélération $a_c$ est non-nulle, alors l'intervalle temporel $\Delta t$ intervenant dans l'équation (1) ci-dessus est variable dans le temps. Pour simplifier l'exposé, on supposera ci-dessous que l'accélération $a_c$ du véhicule est constante pendant la série de mesures considérée.

On va décrire à présent un premier mode de réalisation.

Les étapes de ce mode de réalisation sont mises en oeuvre pour au moins une paire de multiplets comprenant un multiplet de *N* échantillons

$$\boldsymbol{h}_m = [h_m(0), \dots, h_m(N-1)]$$

mesurés au niveau de l'antenne principale, et un multiplet de *N* échantillons

$$\boldsymbol{h}_p = \left[h_p(0), \dots, h_p(N-1)\right]$$

mesurés au niveau de l'antenne prédictive.

Lors d'une première étape, on choisit librement un entier $X > 1$, et l'on subdivise chaque multiplet $\boldsymbol{h}_m$ et $\boldsymbol{h}_p$ en $X$ sous-multiplets comprenant chacun

$$N_x = N/X$$

échantillons. On obtient ainsi les paires de sous-multiplets

$$\boldsymbol{h}_{m,i} = \left[h_m\big((i-1)N_x\big), \dots, h_m(iN_x - 1)\right]$$

et

$$\boldsymbol{h}_{p,i} = \left[h_p\big((i-1)N_x\big), \dots, h_p(iN_x - 1)\right]$$

où $i = \{1, \dots, X\}$.

Lors d'une deuxième étape, on retire les $k_0$ premiers échantillons de chaque sous-multiplet $\boldsymbol{h}_{m,i}$ et les $k_0$ derniers échantillons de chaque sous-multiplet $\boldsymbol{h}_{p,i}$ (et donc $Xk_0$ échantillons de chaque multiplet $\boldsymbol{h}_m$ et de chaque multiplet $\boldsymbol{h}_p$), où $k_0$ est le nombre d'échantillons mesurés pendant le temps que cela prend pour l'antenne principale pour atteindre la position de l'antenne prédictive, sur la base d'une conjecture initiale de la vitesse et de l'accélération du véhicule.

Lors d'une troisième étape, on estime la vitesse moyenne pour chaque paire de sous-multiplets en maximisant la corrélation entre les sous-multiplets de cette paire.

Enfin, lors d'une quatrième étape, on obtient, par exemple au moyen d'une régression linéaire, une accélération estimée $a_{c,est}$ et une vitesse estimée $v_{0,est}$ du véhicule à partir du multiplet de vitesses

$$\boldsymbol{v} = \{v_{i=1}, \dots, v_{i=X}\}$$

représentant les vitesses estimées pour les échantillons numérotés

$$k = \{N_x/2, 3N_x/2, \dots, (2X-1)N_x/2\}\,.$$

On notera que la vitesse $v_0$ du véhicule à l'instant de la mesure de l'échantillon $k = 0$ est simplement égale à $v_{0,est}$.

On va décrire à présent un deuxième mode de réalisation.

Comme pour le premier mode de réalisation, les étapes de ce mode de réalisation sont mises en oeuvre pour au moins une paire de multiplets comprenant un multiplet de $N$ échantillons

$$\boldsymbol{h}_m = [h_m(0), \dots, h_m(N-1)]$$

mesurés au niveau de l'antenne principale, et un multiplet de $N$ échantillons

$$\boldsymbol{h}_p = \left[h_p(0), \dots, h_p(N-1)\right]$$

mesurés au niveau de l'antenne prédictive.

Les échantillons numérotés

$$k = \{0, \dots, N-1\}$$

sont collectés à des intervalles de temps $T_s$ (intervalle temporel d'échantillonnage).

Lors d'une première étape, on retire les $k_0$ premiers échantillons mesurés au niveau de l'antenne principale et les $k_0$ derniers échantillons mesurés au niveau de l'antenne prédictive, où $k_0$ est le nombre d'échantillons mesurés pendant le temps que cela prend pour l'antenne principale pour atteindre la position de l'antenne prédictive, sur la base d'une conjecture initiale de la vitesse initiale $v_{0,init}$ et de l'accélération $a_{c,init}$. Ainsi, $k_0$ est l'entier le plus proche du rapport

$$\frac{d}{T_s \cdot v_{avg,init}} \, ,$$

où d est la distance entre l'antenne principale et l'antenne prédictive, et

$$v_{avg,init} = v_{0,init} + a_{c,init} N T_s / 2 \qquad (2)$$

est la vitesse moyenne conjecturée sur l'intervalle de temps pendant lequel les N échantillons sont mesurés.

Les valeurs choisies pour $v_{0,init}$ et de $a_{c,init}$ pourraient par exemple être nulles, ou être les estimations résultant de l'analyse de l'ensemble précédent de données. Les échantillons au niveau de l'antenne principale avant $k_0$ ne sont associés à aucun échantillon au niveau de l'antenne prédictive à la même position, et ne peuvent donc être utilisés. On obtient ainsi les multiplets d'échantillons

$$\boldsymbol{h}'_m = [h_m(k_0), \dots, h_m(N-1)]$$

et

$$\boldsymbol{h}'_p = \big[h_p(0), \dots, h_p(N-1-k_0)\big],$$

comprenant chacun (N - $k_0$) échantillons.

Lors d'une deuxième étape, on choisit librement un entier X > 1, et l'on subdivise chaque multiplet $\boldsymbol{h}'_m$ et $\boldsymbol{h}'_p$ en X sous-multiplets de

$$N_x = (N - k_0)/X$$

échantillons. On obtient ainsi les paires de sous-multiplets

$$\boldsymbol{h}'_{m,i} = [h_m(k_0 + (i-1)N_x), \dots, h_m(k_0 + iN_x - 1)]$$

et

$$\boldsymbol{h}'_{p,i} = \big[h_p\big((i-1)N_x\big), \dots, h_p(iN_x - 1)\big],$$

où i = {1, ..., X}.

Lors d'une troisième étape, on estime, pour chaque telle paire de sous-multiplets, la vitesse moyenne en maximisant la corrélation entre les sous-multiplets de cette paire. On obtient alors un multiplet

$$\boldsymbol{v} = \{v_{i=1}, \dots, v_{i=X}\}$$

représentant les vitesses estimées pour les échantillons numérotés

$$k = \{(k_0 + N_x)/2, (k_0 + 3N_x)/2, \dots, (k_0 + (2X - 1)N_x)/2\}$$

qui correspondent au milieu de chaque sous-multiplet.

Enfin, lors d'une quatrième étape, on obtient une accélération estimée $a_c = a_{c,est}$ et une *vitesse* estimée $v_{0,est}$ du véhicule à partir de ces estimations de vitesse *v,* par exemple au moyen d'une régression linéaire.

On en déduit la vitesse estimée

$$v_0 = v_{avg,init} + v_{0,est} \qquad (3)$$

du véhicule à l'instant de la mesure de l'échantillon $k = 0$.

On va décrire à présent un troisième mode de réalisation.

Pour ce faire, on choisit d'abord, pour chaque échantillon de canal mesuré au niveau de l'antenne principale, un échantillon de canal mesuré au niveau de l'antenne prédictive, sur la base d'une estimation initiale de la vitesse et de l'accélération. L'échantillon de l'antenne prédictive est choisi de manière à ce qu'il corresponde à un échantillon mesuré à la même position que l'échantillon de l'antenne principale si le véhicule s'est déplacé avec la vitesse et l'accélération estimées. Un modèle mécanique effectue la traduction entre le domaine temporel et le domaine spatial. On calcule ensuite la corrélation moyenne entre les échantillons de l'antenne principale et les échantillons de l'antenne prédictive, puis on détermine la paire vitesse/accélération qui optimise un coefficient de corrélation entre échantillons.

La paire vitesse/accélération optimale peut être déterminée par une méthode de recherche sur une grille en testant toutes les paires réalistes, ou par un algorithme du gradient qui estime le gradient sur la grille et trouve par itérations successives la valeur sur la grille qui optimise ledit critère donné.

Dans le cadre de ce troisième mode de réalisation, on pourra, plus précisément, procéder de la manière suivante.

La vitesse initiale $v_0$ au début d'une série de mesures, et la vitesse $v(t)$ à un instant t, vérifient

$$v(t) = v_0 + a_c t \,. \qquad (4)$$

Comme l'accélération est supposée non-nulle, on doit définir deux intervalles temporels. Le premier intervalle temporel, noté $\Delta^+(t)$, est défini comme le temps qu'il faudra à l'antenne principale pour atteindre l'endroit où se trouve l'antenne prédictive à l'instant $t$ (déplacement d de l'antenne principale commençant à l'instant $t$). Le deuxième intervalle temporel, noté $\Delta^-(t)$, est défini comme le temps écoulé depuis que l'antenne prédictive se trouvait à l'endroit où se trouve l'antenne principale à l'instant $t$ (déplacement $d$ de l'antenne prédictive finissant à l'instant $t$).

Ces deux intervalles temporels sont déduits d'équations quadratiques dérivées de l'équation (4), ce qui donne (en prenant $v(t) > 0$)

$$\Delta^+(t) = \frac{\sqrt{(v_0 + a_c t)^2 + 2 a_c d} - v_0 - a_c t}{a_c} \qquad (5)$$

et

$$\Delta^-(t) = \frac{v_0 + a_c t - \sqrt{(v_0 + a_c t)^2 - 2 a_c d}}{a_c} \,, \qquad (6)$$

où $v_0$ est la vitesse à l'instant $t = 0$ correspondant au premier échantillon de chaque série de mesures.

On en déduit les décalages $\Delta_k^+(k)$ et $\Delta_k^-(k)$ en termes de numéros d'échantillons $k$ correspondant respectivement à $\Delta^+(t)$ et $\Delta^-(t) :$ $\Delta_k^+(k)$ est l'entier le plus proche de $\Delta^+(kT_s)/T_s$, et $\Delta_k^-(k)$ est l'entier le plus proche de $\Delta^-(kT_s)/T_s$, où $T_s$ est l'intervalle d'échantillonnage.

On notera que, dans un multiplet

$$\boldsymbol{h}_m = [h_m(0), \dots, h_m(N-1)]$$

de $N$ échantillons $h_m(k)$ mesurés au niveau de l'antenne principale, les échantillons de numéro inférieur à $k_0 = \Delta_k^+(0)$ ne sont associés à aucun échantillon au niveau de l'antenne prédictive à la position actuelle de l'antenne principale, et ne peuvent donc être utilisés, de sorte que le nombre d'échantillons utilisables est égal à

$$N_k = N - k_0 \, . \tag{7}$$

En utilisant les équations (5), (6) et les valeurs ci-dessus des décalages $\Delta_k^+(k)$ et $\Delta_k^-(k)$, on détermine quels échantillons doivent être associés pour diverses paires conjecturées ($v_0$, $a_c$).

La corrélation moyenne $\hat{c}(v_0, a_c)$ entre un multiplet d'échantillons $\boldsymbol{h}_m$ mesurés au niveau de l'antenne principale et le multiplet associé

$$\boldsymbol{h}_p = \big[ h_p(0), \ldots, h_p(N - 1) \big]$$

de $N$ échantillons $h_p(k)$ mesurés au niveau de l'antenne prédictive, pour des intervalles temporels $\Delta^+(t)$ et $\Delta^-(t)$ pouvant varier dans le temps, est donnée par

$$\hat{c}(v_0, a_c) = \frac{1}{N_k} \sum_{k=k_0}^{N-1} \hat{c}_k(v_0, a_c) \, , \tag{8}$$

où

$$\hat{c}_k(v_0, a_c) = h_m(kT_s) h_p^*((k - \Delta_k^-(k))T_s) \, . \tag{9}$$

On obtient enfin la valeur effective de la paire ($v_0$, $a_c$) en déterminant quelle paire maximise cette corrélation moyenne. En effet, pour toute estimation de la vitesse $v_0$ et de l'accélération $a_c$ qui ne correspondrait pas aux valeurs effectives, la corrélation serait calculée à partir de mesures effectuées à des positions différentes ; la corrélation calculée avec des valeurs erronées est inférieure à la corrélation calculée à partir de la valeur effective de la paire ($v_0$, $a_c$).

On notera enfin que, dans le cas d'une modulation du signal radio utilisant un multiplexage en fréquences, la vitesse et l'accélération doivent être les mêmes pour toutes les sous-porteuses ; l'algorithme d'optimisation devrait donc de préférence, pour une meilleure efficacité, inclure une somme pondérée de la corrélation sur toutes les sous-porteuses.

L'invention peut être mise en oeuvre au sein d'une entité, par exemple une station de base ou un MSC, d'un réseau de communication cellulaire, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de prédiction de canal selon l'invention.

En effet, l'invention vise aussi un programme d'ordinateur téléchargeable depuis un réseau de communication comprenant des instructions pour l'exécution des étapes d'un procédé de prédiction de canal selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, selon la revendication 11, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution de l'un quelconque des procédés de prédiction de canal selon l'invention.

**Revendications**

1. Procédé de prédiction de canal entre un émetteur/récepteur et un véhicule connecté, ledit véhicule comprenant au moins une antenne, dite « antenne principale » dédiée aux échanges de données utiles avec ledit émetteur/récepteur, et au moins une autre antenne, dite « antenne prédictive », placée devant l'antenne antenne principale, une estimation du canal radio à une position actuelle de l'antenne prédictive permettant de prédire le canal radio qui concernera l'antenne principale quand l'antenne principale atteindra la position actuelle de l'antenne prédictive, **caractérisé en ce qu'**il comprend les étapes suivantes :

   - on sélectionne, sur la base d'une conjecture initiale d'une vitesse et d'une accélération du véhicule, pour un multiplet donné d'échantillons de canal mesurés au niveau de l'antenne principale, un multiplet d'échantillons de canal mesurés au niveau de l'antenne prédictive, chaque échantillon de l'antenne prédictive étant sélectionné de manière à ce qu'il corresponde à un échantillon donné de l'antenne principale mesuré ultérieurement à une même position en supposant que le véhicule s'est déplacé avec ladite vitesse et ladite accélération de ladite conjecture initiale ,
   - on calcule un critère associant ledit multiplet d'échantillons mesurés au niveau de l'antenne principale audit multiplet d'échantillons mesurés au niveau de l'antenne prédictive,
   - on détermine une paire vitesse/accélération qui optimise ledit critère, et
   - on sélectionne, pour la prédiction du canal entre l'émetteur/récepteur et l'antenne principale, des échantillons de l'antenne prédictive au moyen de ladite paire vitesse/accélération déterminée.

2. Procédé de prédiction de canal selon la revendication 1, **caractérisé en ce qu'**il comprend, pour au moins une paire de multiplets comprenant un multiplet

$$\boldsymbol{h}_m = [h_m(0), \dots, h_m(N-1)]$$

de $N$ échantillons $h_m(k)$ mesurés au niveau de l'antenne principale, et un multiplet

$$\boldsymbol{h}_p = \big[h_p(0), \dots, h_p(N-1)\big]$$

de $N$ échantillons $h_p(k)$ mesurés au niveau de l'antenne prédictive, les étapes suivantes :

   - on choisit un entier $X > 1$, et l'on subdivise chaque multiplet $\boldsymbol{h}_m$ et $\boldsymbol{h}_p$ en $X$ sous-multiplets comprenant chacun $N_x = N/X$ échantillons, de manière à obtenir des paires de sous-multiplets

$$\boldsymbol{h}_{m,i} = \big[h_m((i-1)N_x), \dots, h_m(iN_x - 1)\big]$$

et

$$\boldsymbol{h}_{p,i} = \big[h_p((i-1)N_x), \dots, h_p(iN_x - 1)\big],$$

où $i = \{1, \dots, X\}$,
   - on retire $k_0$ premiers échantillons de chaque sous-multiplet $\boldsymbol{h}_{m,i}$ et $k_0$ derniers échantillons de chaque sous-multiplet $\boldsymbol{h}_{p,i}$, où $k_0$ est un nombre d'échantillons mesurés pendant un temps que cela prend pour l'antenne principale pour atteindre une position de l'antenne prédictive, sur la base de ladite conjecture initiale de la vitesse et de l'accélération du véhicule,
   - on estime une vitesse moyenne pour chaque paire de sous-multiplets $\boldsymbol{h}_{m,i}$ et $\boldsymbol{h}_{p,i}$ auxquels ont été retirés respectivement les $k_0$ premiers échantillons et les $k_0$ derniers échantillons, en maximisant une corrélation entre les sous-multiplets de cette paire, de manière à obtenir un multiplet de vitesses v = $\{v_{i=1}, \dots, v_{i=X}\}$ représentant des vitesses estimées pour les échantillons numérotés

$$k = \{N_x/2, 3N_x/2, ..., (2X-1)N_x/2\},$$

et

- on obtient, à partir dudit multiplet de vitesses v, une accélération estimée $a_{c,est}$ et une vitesse estimée $v_{0,est}$ du véhicule, où $v_{0,est}$ est égale à une vitesse estimée du véhicule à un instant de la mesure de l'échantillon $k = 0$.

3. Procédé de prédiction de canal selon la revendication 1, **caractérisé en ce qu'**il comprend, pour au moins une paire de multiplets comprenant un multiplet

$$\boldsymbol{h}_m = [h_m(0), ..., h_m(N-1)]$$

de $N$ échantillons $h_m(k)$ mesurés au niveau de l'antenne principale, et un multiplet

$$\boldsymbol{h}_p = [h_p(0), ..., h_p(N-1)]$$

de $N$ échantillons $h_p(k)$ mesurés au niveau de l'antenne prédictive, les étapes suivantes :

- on retire $k_0$ premiers échantillons mesurés au niveau de l'antenne principale et $k_0$ derniers échantillons mesurés au niveau de l'antenne prédictive, où $k_0$ est un nombre d'échantillons mesurés pendant un temps que cela prend pour l'antenne principale pour atteindre une position de l'antenne prédictive, sur la base de ladite conjecture initiale de la vitesse et de l'accélération du véhicule, de manière à obtenir des multiplets d'échantillons

$$\boldsymbol{h'}_m = [h_m(k_0), ..., h_m(N-1)]$$

et

$$\boldsymbol{h'}_p = [h_p(0), ..., h_p(N-1-k_0)],$$

- on choisit un entier $X > 1$, et l'on subdivise chaque multiplet $\boldsymbol{h'}_m$ et $\boldsymbol{h'}_p$ en $X$ sous-multiplets de $N_x = (N - k_0)/X$ échantillons, de manière à obtenir des paires de sous-multiplets

$$\boldsymbol{h'}_{m,i} = [h_m(k_0 + (i-1)N_x), ..., h_m(k_0 + iN_x - 1)]$$

et

$$\boldsymbol{h'}_{p,i} = [h_p((i-1)N_x), ..., h_p(iN_x - 1)],$$

où $i = \{1, ..., X\}$,
- on estime, pour chaque telle paire de sous-multiplets $\boldsymbol{h'}_{m,i}$ et $\boldsymbol{h'}_{p,i}$, une vitesse moyenne en maximisant une corrélation entre les sous-multiplets $\boldsymbol{h'}_{m,i}$ et $\boldsymbol{h'}_{p,i}$ de cette paire, de manière à obtenir une suite de vitesses estimées v = $\{v_{i=1}, ..., v_{i=X}\}$ représentant des vitesses estimées pour les échantillons numérotés

$$k = \{(k_0 + N_x)/2, (k_0 + 3N_x)/2, ..., (k_0 + (2X-1)N_x)/2\},$$

- on obtient, à partir de cette suite de vitesses estimées v, une accélération estimée $a_c = a_{c,est}$ et une vitesse estimée $v_{0,est}$ du véhicule, et
- on en déduit une vitesse estimée

$$v_0 = v_{avg,init} + v_{0,est}$$

du véhicule à un instant de la mesure de l'échantillon $k = 0$, où $v_{avg,init}$ est une vitesse moyenne conjecturée sur un intervalle de temps pendant lequel les $N$ échantillons sont mesurés.

**4.** Procédé de prédiction de canal selon la revendication 1, **caractérisé en ce qu'**il comprend les étapes suivantes :

- on calcule un intervalle temporel $\Delta^+(t)$ représentant un temps qu'il faudra à l'antenne principale pour atteindre un endroit où se trouve l'antenne prédictive à un instant $t$,
- on calcule un intervalle temporel $\Delta^-(t)$ représentant un temps écoulé depuis que l'antenne prédictive se trouvait à un endroit où se trouve l'antenne principale à l'instant $t$,
- on en déduit des décalages $\Delta_k^+(k)$ et $\Delta_k^-(k)$ en termes de numéros d'échantillons $k$ correspondant respectivement à $\Delta^+(t)$ et $\Delta^-(t)$,
- on supprime, dans un multiplet de $N$ échantillons mesurés au niveau de l'antenne principale, des échantillons de numéro inférieur à $k_0 = \Delta_k^+(0)$,
- pour diverses paires conjecturées $(v_0, a_c)$, on détermine, au moyen des valeurs de $\Delta^+(t)$, $\Delta^-(t)$, $\Delta_k^+(k)$ et $\Delta_k^-(k)$, quels échantillons mesurés au niveau de l'antenne principale doivent être associés à quels échantillons mesurés au niveau de l'antenne prédictive, et l'on calcule une corrélation moyenne entre un multiplet d'échantillons mesurés au niveau de l'antenne principale et un multiplet associé d'échantillons mesurés au niveau de l'antenne prédictive, et
- l'on détermine quelle paire $(v_0, a_c)$ maximise ladite corrélation moyenne.

**5.** Entité réseau utilisée dans la prédiction de canal entre un émetteur/récepteur et un véhicule connecté, ledit véhicule comprenant au moins une antenne, dite « antenne principale » dédiée aux échanges de données utiles avec ledit émetteur/récepteur, et au moins une autre antenne, dite « antenne prédictive », placée devant l'antenne antenne principale, une estimation du canal radio à une position actuelle de l'antenne prédictive permettant de prédire le canal radio qui concernera l'antenne principale quand l'antenne principale atteindra la position actuelle de l'antenne prédictive,
**caractérisée en ce qu'**elle comprend des moyens pour :

- sélectionner, sur la base d'une conjecture initiale d'une vitesse et d'une accélération du véhicule, pour un multiplet donné d'échantillons de canal mesurés au niveau de l'antenne principale, un multiplet d'échantillons de canal mesurés au niveau de l'antenne prédictive, chaque échantillon de l'antenne prédictive étant sélectionné de manière à ce qu'il corresponde à un échantillon donné de l'antenne principale mesuré ultérieurement à une même position en supposant que le véhicule s'est déplacé avec ladite vitesse et ladite accélération de ladite conjecture initiale,
- calculer un critère associant ledit multiplet d'échantillons mesurés au niveau de l'antenne principale audit multiplet d'échantillons mesurés au niveau de l'antenne prédictive,
- déterminer une paire vitesse/accélération qui optimise ledit critère, et
- sélectionner, pour la prédiction du canal radio entre l'émetteur/récepteur et l'antenne principale, des échantillons de l'antenne prédictive au moyen de ladite paire vitesse/accélération déterminée.

**6.** Entité réseau selon la revendication 5, **caractérisée en ce qu'**elle comprend en outre, pour au moins une paire de multiplets comprenant un multiplet

$$\boldsymbol{h}_m = [h_m(0), ..., h_m(N-1)]$$

de $N$ échantillons $h_m(k)$ mesurés au niveau de l'antenne principale, et un multiplet

$$\boldsymbol{h}_p = [h_p(0), ..., h_p(N-1)]$$

de $N$ échantillons $h_p(k)$ mesurés au niveau de l'antenne prédictive, des moyens pour:

- choisir un entier $X > 1$, et subdiviser chaque multiplet $\boldsymbol{h}_m$ et $\boldsymbol{h}_p$ en $X$ sous-multiplets comprenant chacun $N_x = N/X$ échantillons, de manière à obtenir des paires de sous-multiplets

$$\boldsymbol{h}_{m,i} = \left[ h_m\big((i-1)N_x\big), \dots, h_m(iN_x - 1) \right]$$

et

$$\boldsymbol{h}_{p,i} = \left[ h_p\big((i-1)N_x\big), \dots, h_p(iN_x - 1) \right],$$

où $i = \{1, \dots, X\}$,
- retirer $k_0$ premiers échantillons de chaque sous-multiplet $\boldsymbol{h}_{m,i}$ et $k_0$ derniers échantillons de chaque sous-multiplet $\boldsymbol{h}_{p,i}$, où $k_0$ est un nombre d'échantillons mesurés pendant un temps que cela prend pour l'antenne principale pour atteindre une position de l'antenne prédictive, sur la base de ladite conjecture initiale de la vitesse et de l'accélération du véhicule,
- estimer une vitesse moyenne pour chaque paire de sous-multiplets $\boldsymbol{h}_{m,i}$ et $\boldsymbol{h}_{p,i}$ auxquels ont été retirés respectivement les $k_0$ premiers échantillons et les $k_0$ derniers échantillons, en maximisant une corrélation entre les sous-multiplets de cette paire, de manière à obtenir un multiplet de vitesses $\boldsymbol{v} = \{v_{i=1}, \dots, v_{i=X}\}$ représentant des vitesses estimées pour les échantillons numérotés

$$k = \{N_x/2, 3N_x/2, \dots, (2X - 1)N_x/2\},$$

et
- obtenir, à partir dudit multiplet de vitesses $v$, une accélération estimée $a_{c,est}$ et une vitesse estimée du véhicule, où est égale à une vitesse estimée du véhicule à un instant de la mesure de l'échantillon $k = 0$.

**7.** Entité réseau selon la revendication 5, **caractérisée en ce qu'**elle comprend en outre, pour au moins une paire de multiplets comprenant un multiplet

$$\boldsymbol{h}_m = [h_m(0), \dots, h_m(N-1)]$$

de $N$ échantillons $h_m(k)$ mesurés au niveau de l'antenne principale, et un multiplet

$$\boldsymbol{h}_p = \left[ h_p(0), \dots, h_p(N-1) \right]$$

de $N$ échantillons $h_p(k)$ mesurés au niveau de l'antenne prédictive, des moyens pour:

- retirer $k_0$ premiers échantillons mesurés au niveau de l'antenne principale et $k_0$ derniers échantillons mesurés au niveau de l'antenne prédictive, où $k_0$ est un nombre d'échantillons mesurés pendant un temps que cela prend pour l'antenne principale pour atteindre une position de l'antenne prédictive, sur la base de ladite conjecture initiale de la vitesse et de l'accélération du véhicule, de manière à obtenir des multiplets d'échantillons

$$\boldsymbol{h}'_m = [h_m(k_0), \dots, h_m(N-1)]$$

et

$$\boldsymbol{h}'_p = \left[ h_p(0), \dots, h_p(N-1-k_0) \right],$$

- choisir un entier $X > 1$, et subdiviser chaque multiplet $\boldsymbol{h}'_m$ et $\boldsymbol{h}'_p$ en $X$ sous-multiplets de $N_x = (N - k_0)/X$ échantillons, de manière à obtenir des paires de sous-multiplets

$$\boldsymbol{h'}_{m,i} = [h_m(k_0 + (i-1)N_x), ..., h_m(k_0 + iN_x - 1)]$$

et

$$\boldsymbol{h'}_{p,i} = \left[h_p\big((i-1)N_x\big), ..., h_p(iN_x - 1)\right],$$

où $i = \{1, ..., X\}$,

- estimer, pour chaque telle paire de sous-multiplets $\boldsymbol{h'}_{m,i}$ et $\boldsymbol{h'}_{p,i}$, une vitesse moyenne en maximisant une corrélation entre les sous-multiplets $\boldsymbol{h'}_{m,i}$ et $\boldsymbol{h'}_{p,i}$ de cette paire, de manière à obtenir une suite de vitesses estimées $\boldsymbol{v} = \{v_{i=1}, ..., v_{i=X}\}$ représentant des vitesses estimées pour les échantillons numérotés

$$k = \{(k_0 + N_x)/2, (k_0 + 3N_x)/2, ..., (k_0 + (2X-1)N_x)/2\},$$

- obtenir, à partir de cette suite de vitesses estimées v, une accélération estimée $a_c = a_{c,est}$ et une vitesse estimée du véhicule, et
- en déduire une vitesse estimée

$$v_0 = v_{avg,init} + v_{0,est}$$

du véhicule à un instant de la mesure de l'échantillon $k = 0$, où $v_{avg,init}$ est une vitesse moyenne conjecturée sur un intervalle de temps pendant lequel les $N$ échantillons sont mesurés.

8.  Entité réseau selon la revendication 5, **caractérisée en ce qu'**elle comprend en outre des moyens pour :

    - calculer un intervalle temporel $\Delta^+(t)$ représentant un temps qu'il faudra à l'antenne principale pour atteindre un endroit où se trouve l'antenne prédictive à un instant t,
    - calculer un intervalle temporel $\Delta^-(t)$ représentant un temps écoulé depuis que l'antenne prédictive se trouvait à un endroit où se trouve l'antenne principale à l'instant $t$,
    - en déduire des décalages $\Delta_k^+(k)$ et $\Delta_k^-(k)$ en termes de numéros d'échantillons $k$ correspondant respectivement à $\Delta^+(t)$ et $\Delta^-(t)$,
    - supprimer, dans un multiplet de $N$ échantillons mesurés au niveau de l'antenne principale, des échantillons de numéro inférieur à $k_0 = \Delta_k^+(0)$,

    - pour diverses paires conjecturées $(v_0, a_c)$, déterminer, au moyen des valeurs de $\Delta^+(t), \Delta^-(t), \Delta_k^+(k)$ et $\Delta_k^-(k)$, quels échantillons mesurés au niveau de l'antenne principale doivent être associés à quels échantillons mesurés au niveau de l'antenne prédictive, et calculer une corrélation moyenne entre un multiplet d'échantillons mesurés au niveau de l'antenne principale et un multiplet associé d'échantillons mesurés au niveau de l'antenne prédictive, et
    - déterminer quelle paire $(v_0, a_c)$ maximise ladite corrélation moyenne.

9.  Entité réseau selon l'une quelconque des revendications 5 à 8, **caractérisée en ce qu'**elle est hébergée dans une station de base ou dans un MSC, Mobile Switching Center, d'un réseau de communication cellulaire.

10. Réseau de communication, **caractérisé en ce qu'**il comprend :

    - au moins une entité réseau selon l'une quelconque des revendications 5 à 9, et
    - au moins un véhicule équipé d'au moins une antenne principale et d'au moins une antenne prédictive.

11. Moyen de stockage de données inamovible, ou partiellement ou totalement amovible, comportant des instructions de code de programme informatique pour l'exécution des étapes d'un procédé de prédiction de canal selon l'une quelconque des revendications 1 à 4.

12. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de prédiction de canal selon l'une quelconque des revendications 1 à 4, lorsqu'il est exécuté sur un ordinateur.

**Patentansprüche**

1. Verfahren zum Vorhersagen des Kanals zwischen einem Sender-Empfänger und einem angeschlossenen Fahrzeug, wobei das Fahrzeug mindestens eine Antenne, "Hauptantenne" genannt, die den Austauschen von Nutzdaten mit dem Sender-Empfänger gewidmet ist, und mindestens eine andere Antenne, "Vorhersageantenne" genannt, die vor der Antenne Hauptantenne platziert ist, umfasst, wobei eine Schätzung des Funkkanals an einer aktuellen Position der Vorhersageantenenne es ermöglicht, den Funkkanal vorherzusagen, der die Hauptantenne betreffen wird, wenn die Hauptantenne die aktuelle Position der Vorhersageantenne erreicht,
**dadurch gekennzeichnet, dass** es die folgenden Schritte umfasst:

   - Auswählen eines bestimmten n-Bit-Bytes von an der Vorhersageantenne gemessenen Kanalabtastwerten für ein bestimmtes n-Bit-Byte von an der Hauptantenne gemessenen Kanalabtastwerten auf Grundlage einer ersten Vermutung einer Geschwindigkeit und einer Beschleunigung des Fahrzeugs, wobei jeder Abtastwert der Vorhersageantenne so ausgewählt wird, dass er einem bestimmten Abtastwert der Hauptantenne entspricht, der später an einer gleichen Position gemessen wird, unter der Annahme, dass das Fahrzeug sich mit der Geschwindigkeit und der Beschleunigung der ersten Vermutung bewegt hat,
   - Berechnen eines Kriteriums, das das n-Bit-Byte von an der Hauptantenne gemessenen Abtastwerten dem n-Bit-Byte von an der Vorhersageantenne gemessenen Abtastwerten zuordnet,
   - Bestimmen eines Paars Geschwindigkeit/Beschleunigung, das das Kriterium optimiert, und
   - Auswählen von Abtastwerten der Vorhersageantenne mithilfe des bestimmten Paars Geschwindigkeit/Beschleunigung für die Vorhersage des Kanals zwischen Sender-Empfänger und der Hauptantenne.

2. Verfahren zum Vorhersagen eines Kanals nach Anspruch 1, **dadurch gekennzeichnet, dass** es für mindestens ein Paar von n-Bit-Bytes, das ein n-Bit-Byte

$$\boldsymbol{h}_m = [h_m(0), ..., h_m(N-1)]$$

von an der Hauptantenne gemessenen $N$ Abtastwerten $h_m(k)$ und ein n-Bit-Byte

$$\boldsymbol{h}_p = [h_p(0), ..., h_p(N-1)]$$

von an der Vorhersageantenne gemessenen $N$ Abtastwerten $h_p(k)$ umfasst, die folgenden Schritte aufweist:

   - Wählen einer Ganzzahl $X > 1$ und Aufteilen jedes n-Bit-Bytes $\boldsymbol{h}_m$ und $\boldsymbol{h}_p$ in $X$ Teil-n-Bit-Bytes, die jeweils $N_x = N/X$ Abtastwerte umfassen, so dass Paare von Teil-n-Bit-Bytes

$$\boldsymbol{h}_{m,i} = [h_m((i-1)N_x), ..., h_m(iN_x - 1)]$$

und

$$\boldsymbol{h}_{p,i} = [h_p((i-1)N_x), ..., h_p(iN_x - 1)]$$

erhalten werden, wobei $i = \{1, ..., X\}$,
   - Aussondern von $k_0$ ersten Abtastwerten jedes Teil-n-Bit-Bytes $\boldsymbol{h}_{m,i}$ und $k_0$ letzten Abtastwerten jedes Teil-n-Bit-Bytes $\boldsymbol{h}_{p,i}$, wobei $k_0$ eine Anzahl von Abtastwerten ist, die während einer Zeit gemessen werden, die die Hauptantenne braucht, um eine Position der Vorhersageantenne zu erreichen, auf Grundlage der ersten Vermutung der Geschwindigkeit und der Beschleunigung des Fahrzeugs,
   - Schätzen einer mittleren Geschwindigkeit für jedes Paar von Teil-n-Bit-Bytes $\boldsymbol{h}_{m,i}$ und $\boldsymbol{h}_{p,i}$, von denen jeweils

die $k_0$ ersten Abtastwerte und die $k_0$ letzten Abtastwerte ausgesondert wurden, indem eine Korrelation zwischen den n-Bit-Bytes dieses Paars maximiert wird, so dass ein n-Bit-Byte von Geschwindigkeiten $v = \{v_{i=1}, ..., v_{i=X}\}$ erhalten wird, das die geschätzten Geschwindigkeiten für die nummerierten Abtastwerte

$$k = \{N_x/2, 3N_x/2, ..., (2X-1)N_x/2\}$$

repräsentiert, und
- Erhalten einer geschätzten Beschleunigung $a_{c,est}$ und einer geschätzten Geschwindigkeit $v_{0,est}$ des Fahrzeugs auf Grundlage des n-Bit-Bytes der Geschwindigkeit $v$, wobei $v_{0,est}$ gleich einer geschätzten Geschwindigkeit des Fahrzeugs in einem Moment der Messung des Abtastwertes $k = 0$ ist.

3. Verfahren zum Vorhersagen des Kanals nach Anspruch 1, **dadurch gekennzeichnet, dass** es für mindestens ein Paar von n-Bit-Bytes, das ein n-Bit-Byte

$$\boldsymbol{h}_m = [h_m(0), ..., h_m(N-1)]$$

von an der Hauptantenne gemessenen $N$ Abtastwerten $h_m(k)$ und ein n-Bit-Byte

$$\boldsymbol{h}_p = [h_p(0), ..., h_p(N-1)]$$

von an der Vorhersageantenne gemessenen $N$ Abtastwerten $h_p(k)$ umfasst, die folgenden Schritte umfasst:

- Aussondern von an der Hauptantenne gemessenen $k_0$ ersten Abtastwerten und an der Vorhersageantenne gemessenen $k_0$ letzten Abtastwerten, wobei $k_0$ eine Anzahl von Abtastwerten ist, die während einer Zeit gemessen werden, die die Hauptantenne braucht, um eine Position der Vorhersageantenne zu erreichen, auf Grundlage der ersten Vermutung der Geschwindigkeit und der Beschleunigung des Fahrzeugs, so dass n-Bit-Bytes von Abtastwerten

$$\boldsymbol{h}'_m = [h_m(k_0), ..., h_m(N-1)]$$

und

$$\boldsymbol{h}'_p = [h_p(0), ..., h_p(N-1-k_0)]$$

erhalten werden,
- Wählen einer Ganzzahl $X > 1$ und Aufteilen jedes n-Bit-Bytes $\boldsymbol{h}'_m$ und $\boldsymbol{h}'_p$ in $X$ Teil-n-Bit-Bytes von $N_x = (N - k_0)/X$ Abtastwerten, so dass Paare von Teil-n-Bit-Bytes

$$\boldsymbol{h}'_{m,i} = [h_m(k_0 + (i-1)N_x), ..., h_m(k_0 + iN_x - 1)]$$

und

$$\boldsymbol{h}'_{p,i} = [h_p((i-1)N_x), ..., h_p(iN_x - 1)]$$

erhalten werden, wobei $i = \{1, ..., X\}$,
- Schätzen einer mittleren Geschwindigkeit für jedes Paar von Teil-n-Bit-Bytes $\boldsymbol{h}'_{m,i}$ und $\boldsymbol{h}'_{p,i}$, indem eine Korrelation zwischen den n-Bit-Bytes $\boldsymbol{h}'_{m,i}$ und $\boldsymbol{h}'_{p,i}$ dieses Paars maximiert wird, so dass eine Folge von geschätzten Geschwindigkeiten $v = \{v_{i=1}, ..., v_{i=X}\}$ erhalten wird, die die geschätzten Geschwindigkeiten für die nummerierten Abtastwerte

$$k = \{(k_0 + N_x)/2, (k_0 + 3N_x)/2, \ldots, (k_0 + (2X - 1)N_x)/2\}$$

repräsentiert,

- Erhalten einer geschätzten Beschleunigung $a_c = a_{c,est}$ und einer geschätzten Geschwindigkeit $v_{0,est}$ des Fahrzeugs auf Grundlage dieser Folge geschätzter Geschwindigkeiten $v$ und
- davon Ableiten einer geschätzten Geschwindigkeit

$$v_0 = v_{avg,init} + v_{0,est}$$

des Fahrzeugs in einem Moment der Messung des Abtastwertes $k = 0$, wobei $v_{avg,init}$ eine vermutete mittlere Geschwindigkeit über ein Zeitintervall ist, während dessen die $N$ Abtastwerte gemessen werden.

4.  Verfahren zum Vorhersagen des Kanals nach Anspruch 1, **dadurch gekennzeichnet, dass** es die folgenden Schritte umfasst:

- Berechnen eines Zeitintervalls $\Delta^+(t)$, das eine Zeit repräsentiert, die die Hauptantenne braucht, um einen Ort zu erreichen, an dem sich die Vorhersageantenne in einem Moment t befindet,
- Berechnen eines Zeitintervalls $\Delta^-(t)$, das eine Zeit repräsentiert, die vergangen ist, seit sich die Vorhersageantenne an einem Ort befunden hat, an dem sich die Hauptantenne im Moment t befindet,
- davon Ableiten der Verzögerungen $\Delta_k^+(k)$ und $\Delta_k^-(k)$ als Zahlen von Abtastwerten $k$, die jeweils $\Delta^+(t)$ und $\Delta^-(t)$ entsprechen,
- Streichen der Abtastwerte mit einer Zahl kleiner als $k_o = \Delta_k^+(0)$ in einem n-Bit-Byte von an der Hauptantenne gemessenen $N$ Abtastwerten,
- Bestimmen mithilfe der Werte von $\Delta^+(t)$, $\Delta^-(t)$, $\Delta_k^+(k)$ und $\Delta_k^-(k)$ für verschiedene vermutete Paare ($v_0$, $a_c$), welche an der Hauptantenne gemessenen Abtastwerte welchen an der Vorhersageantenne gemessenen Abtastwerten zugeordnet werden müssen, und Berechnen einer mittleren Korrelation zwischen einem n-Bit-Byte von an der Hauptantenne gemessenen Abtastwerten und einem n-Bit-Byte von an der Vorhersageantenne gemessenen Abtastwerten und
- Bestimmen, welches Paar ($v_0$, $a_c$) die mittlere Korrelation maximiert.

5.  Netzeinheit, die beim Vorhersagen des Kanals zwischen einem Sender-Empfänger und einem angeschlossenen Fahrzeug verwendet wird, wobei das Fahrzeug mindestens eine Antenne, "Hauptantenne" genannt, die den Austauschen von Nutzdaten mit dem Sender-Empfänger gewidmet ist, und mindestens eine andere Antenne, "Vorhersageantenne" genannt, die vor der Antenne Hauptantenne platziert ist, umfasst, wobei eine Schätzung des Funkkanals an einer aktuellen Position der Vorhersageantenenne es ermöglicht, den Funkkanal vorherzusagen, der die Hauptantenne betreffen wird, wenn die Hauptantenne die aktuelle Position der Vorhersageantenne erreicht, **dadurch gekennzeichnet, dass** sie Mittel zu Folgendem umfasst:

- Auswählen eines bestimmten n-Bit-Bytes von an der Vorhersageantenne gemessenen Kanalabtastwerten für ein bestimmtes n-Bit-Byte von an der Hauptantenne gemessenen Kanalabtastwerten auf Grundlage einer ersten Vermutung einer Geschwindigkeit und einer Beschleunigung des Fahrzeugs, wobei jeder Abtastwert der Vorhersageantenne so ausgewählt wird, dass er einem bestimmten Abtastwert der Hauptantenne entspricht, der später an einer gleichen Position gemessen wird, unter der Annahme, dass das Fahrzeug sich mit der Geschwindigkeit und der Beschleunigung der ersten Vermutung bewegt hat,
- Berechnen eines Kriteriums, das das n-Bit-Byte von an der Hauptantenne gemessenen Abtastwerten dem n-Bit-Byte von an der Vorhersageantenne gemessenen Abtastwerten zuordnet,
- Bestimmen eines Paars Geschwindigkeit/Beschleunigung, das das Kriterium optimiert, und
- Auswählen von Abtastwerten der Vorhersageantenne mithilfe des Paars Geschwindigkeit/Beschleunigung für die Vorhersage des Kanals zwischen Sender-Empfänger und der Hauptantenne.

6.  Netzeinheit nach Anspruch 5, **dadurch gekennzeichnet, dass** sie außerdem für mindestens ein Paar von n-Bit-Bytes, das ein n-Bit-Byte

$$\boldsymbol{h}_m = [h_m(0), ..., h_m(N-1)]$$

von an der Hauptantenne gemessenen *N* Abtastwerten $h_m(k)$ und ein n-Bit-Byte

$$\boldsymbol{h}_p = [h_p(0), ..., h_p(N-1)]$$

von an der Vorhersageantenne gemessenen *N* Abtastwerten $h_p(k)$ umfasst, Mittel zu Folgendem umfasst:

- Wählen einer Ganzzahl *X* > 1 und Aufteilen jedes n-Bit-Bytes $\boldsymbol{h}_m$ und $\boldsymbol{h}_p$ in *X* Teil-n-Bit-Bytes, die jeweils $N_x$ = *N/X* Abtastwerte umfassen, so dass Paare von Teil-n-Bit-Bytes

$$\boldsymbol{h}_{m,i} = [h_m\big((i-1)N_x\big), ..., h_m(iN_x - 1)]$$

und

$$\boldsymbol{h}_{p,i} = [h_p\big((i-1)N_x\big), ..., h_p(iN_x - 1)]$$

erhalten werden, wobei *i* = {1, ..., *X*},
- Aussondern von $k_0$ ersten Abtastwerten jedes Teil-n-Bit-Bytes $\boldsymbol{h}_{m,i}$ und $k_0$ letzten Abtastwerten jedes Teil-n-Bit-Bytes $\boldsymbol{h}_{p,i}$, wobei $k_0$ eine Anzahl von Abtastwerten ist, die während einer Zeit gemessen werden, die die Hauptantenne braucht, um eine Position der Vorhersageantenne zu erreichen, auf Grundlage der ersten Vermutung der Geschwindigkeit und der Beschleunigung des Fahrzeugs,
- Schätzen einer mittleren Geschwindigkeit für jedes Paar von Teil-n-Bit-Bytes $\boldsymbol{h}_{m,i}$ und $\boldsymbol{h}_{p,i}$, von denen jeweils die $k_0$ ersten Abtastwerte und die $k_0$ letzten Abtastwerte ausgesondert wurden, indem eine Korrelation zwischen den Teil-n-Bit-Bytes dieses Paars maximiert wird, so dass ein n-Bit-Byte von Geschwindigkeiten *v* = {$v_{i=1}$, ..., $v_{i=X}$} erhalten wird, das die geschätzten Geschwindigkeiten für die nummerierten Abtastwerte

$$k = \{N_x/2, 3N_x/2, ..., (2X-1)N_x/2\}$$

repräsentiert, und
- Erhalten einer geschätzten Beschleunigung $a_{c,est}$ und einer geschätzten Geschwindigkeit $v_{0,est}$ des Fahrzeugs auf Grundlage des n-Bit-Bytes der Geschwindigkeit *v,* wobei $v_{0,est}$ gleich einer geschätzten Geschwindigkeit des Fahrzeugs in einem Moment der Messung des Abtastwertes *k* = 0 ist.

**7.** Netzeinheit nach Anspruch 5, **dadurch gekennzeichnet, dass** sie für mindestens ein Paar von n-Bit-Bytes, das ein n-Bit-Byte

$$\boldsymbol{h}_m = [h_m(0), ..., h_m(N-1)]$$

von an der Hauptantenne gemessenen *N* Abtastwerten $h_m(k)$ und ein n-Bit-Byte

$$\boldsymbol{h}_p = [h_p(0), ..., h_p(N-1)]$$

von an der Vorhersageantenne gemessenen *N* Abtastwerten $h_p(k)$ umfasst, Mittel zu Folgendem umfasst:

- Aussondern von an der Hauptantenne gemessenen $k_0$ ersten Abtastwerten und an der Vorhersageantenne gemessenen $k_0$ letzten Abtastwerten, wobei $k_0$ eine Anzahl von Abtastwerten ist, die während einer Zeit gemessen werden, die die Hauptantenne braucht, um eine Position der Vorhersageantenne zu erreichen, auf Grundlage der ersten Vermutung der Geschwindigkeit und der Beschleunigung des Fahrzeugs, so dass n-Bit-Bytes von Abtastwerten

$$\boldsymbol{h}'_m = [h_m(k_0), ..., h_m(N-1)]$$

und

$$\boldsymbol{h}'_p = [h_p(0), ..., h_p(N-1-k_0)]$$

erhalten werden,

- Wählen einer Ganzzahl $X > 1$ und Aufteilen jedes n-Bit-Bytes $\boldsymbol{h}'_m$ und $\boldsymbol{h}'_p$ in $X$ Teil-n-Bit-Bytes von $N_x = (N - k_0)/X$ Abtastwerten, so dass Paare von Teil-n-Bit-Bytes

$$\boldsymbol{h}'_{m,i} = [h_m(k_0 + (i-1)N_x), ..., h_m(k_0 + iN_x - 1)]$$

und

$$\boldsymbol{h}'_{p,i} = [h_p((i-1)N_x), ..., h_p(iN_x - 1)]$$

erhalten werden, wobei $i = \{1, ..., X\}$,

- Schätzen einer mittleren Geschwindigkeit für jedes Paar von Teil-n-Bit-Bytes $\boldsymbol{h}'_{m,i}$ und $\boldsymbol{h}'_{p,i}$, indem eine Korrelation zwischen den n-Bit-Bytes $\boldsymbol{h}'_{m,i}$ und $\boldsymbol{h}'_{p,i}$ dieses Paars maximiert wird, so dass eine Folge von geschätzten Geschwindigkeiten $v = \{v_{i=1}, ..., v_{i=X}\}$ erhalten wird, die die geschätzten Geschwindigkeiten für die nummerierten Abtastwerte

$$k = \{(k_0 + N_x)/2, (k_0 + 3N_x)/2, ..., (k_0 + (2X-1)N_x)/2\}$$

repräsentiert,

- Erhalten einer geschätzten Beschleunigung $a_c = a_{c,est}$ und einer geschätzten Geschwindigkeit $v_{0,est}$ des Fahrzeugs auf Grundlage dieser Folge geschätzter Geschwindigkeiten v und
- davon Ableiten einer geschätzten Geschwindigkeit

$$v_0 = v_{avg,init} + v_{0,est}$$

des Fahrzeugs in einem Moment der Messung des Abtastwertes $k = 0$, wobei $v_{avg,init}$ eine vermutete mittlere Geschwindigkeit über ein Zeitintervall ist, während dessen die $N$ Abtastwerte gemessen werden.

8. Netzeinheit nach Anspruch 5, **dadurch gekennzeichnet, dass** sie außerdem Mittel zu Folgendem umfasst:

- Berechnen eines Zeitintervalls $\Delta^+(t)$, das eine Zeit repräsentiert, die die Hauptantenne braucht, um einen Ort zu erreichen, an dem sich die Vorhersageantenne in einem Moment $t$ befindet,
- Berechnen eines Zeitintervalls $\Delta^-(t)$, das eine Zeit repräsentiert, die vergangen ist, seit sich die Vorhersageantenne an einem Ort befunden hat, an dem sich die Hauptantenne im Moment $t$ befindet,
- davon Ableiten der Verzögerungen $\Delta_k^+(k)$ und $\Delta_k^-(k)$ als Zahlen von Abtastwerten $k$, die jeweils $\Delta^+(t)$ und $\Delta^-(t)$ entsprechen,
- Streichen der Abtastwerte mit einer Zahl kleiner als $k_o = \Delta_k^+(0)$ in einem n-Bit-Byte von an der Hauptantenne gemessenen $N$ Abtastwerten,
- Bestimmen mithilfe der Werte von $\Delta^+(t)$, $\Delta^-(t)$, $\Delta_k^+(k)$ und $\Delta_k^-(k)$ für verschiedene vermutete Paare ($v_0$, $a_c$), welche an der Hauptantenne gemessenen Abtastwerte welchen an der Vorhersageantenne gemessenen Abtastwerten zugeordnet werden müssen, und Berechnen einer mittleren Korrelation zwischen einem n-Bit-Byte von an der Hauptantenne gemessenen Abtastwerten und einem zugeordneten n-Bit-Byte von an der Vorhersageantenne gemessenen Abtastwerten und

- Bestimmen, welches Paar ($v_0$, $a_c$) die mittlere Korrelation maximiert.

9. Netzeinheit nach einem der Ansprüche 5 bis 8, **dadurch gekennzeichnet, dass** sie in einer Basisstation oder in einem MSC, Mobile Switching Center, eines mobilen Kommunikationsnetzes untergebracht ist.

10. Kommunikationsnetz, **dadurch gekennzeichnet, dass** es umfasst:

   - mindestens eine Netzeinheit nach einem der Ansprüche 5 bis 9 und
   - mindestens ein Fahrzeug, das mit mindestens einer Hauptantenne und mindestens einer Vorhersageantenne ausgestattet ist.

11. Mittel zum Speichern von Daten, das nicht herausnehmbar oder teilweise oder vollständig herausnehmbar ist und Anweisungen eines informationstechnischen Programmcodes zur Ausführung der Schritte eines Verfahrens zum Vorhersagen des Kanals nach einem der Ansprüche 1 bis 4 umfasst.

12. Computerprogramm, das aus einem Kommunikationsnetz herunterladbar ist und/oder auf einem computerlesbaren Medium gespeichert ist und/oder durch einen Mikroprozessor ausführbar ist, **dadurch gekennzeichnet, dass** es Anweisungen zur Ausführung der Schritte eines Verfahrens zum Vorhersagen des Kanals nach einem der Ansprüche 1 bis 4 umfasst, wenn es von einem Computer ausgeführt wird.

**Claims**

1. Method for predicting a channel between a transceiver and a connected vehicle, said vehicle comprising at least one antenna, known as "main antenna", dedicated to exchanges of payload data with said transceiver, and at least one other antenna, known as "predictor antenna", placed in front of the main antenna, an estimate of the radio channel at a current position of the predictor antenna making it possible to predict the radio channel that the main antenna will be dealing with when the main antenna reaches the current position of the predictor antenna, **characterized in that** it comprises the following steps:

   - selecting, on the basis of an initial conjecture of a speed and of an acceleration of the vehicle, for a given multiplet of channel samples measured at the main antenna, a multiplet of channel samples measured at the predictor antenna, each sample of the predictor antenna being selected such that it corresponds to a given sample of the main antenna subsequently measured at the same position, assuming that the vehicle has moved at said speed and said acceleration of said initial conjecture,
   - calculating a criterion associating said multiplet of samples measured at the main antenna with said multiplet of samples measured at the predictor antenna,
   - determining a speed/acceleration pair that optimizes said criterion, and,
   - in order to predict the channel between the transceiver and the main antenna, selecting samples of the predictor antenna by way of said determined speed/acceleration pair.

2. Channel prediction method according to Claim 1, **characterized in that** it comprises, for at least one pair of multiplets comprising a multiplet

$$\boldsymbol{h}_m = [h_m(0), ..., h_m(N-1)]$$

of $N$ samples $h_m(k)$ measured at the main antenna, and a multiplet

$$\boldsymbol{h}_p = \big[h_p(0), ..., h_p(N-1)\big]$$

of $N$ samples $h_p(k)$ measured at the predictor antenna, the following steps:

   - choosing an integer $X > 1$, and subdividing each multiplet $\boldsymbol{h}_m$ and $\boldsymbol{h}_p$ into $X$ sub-multiplets each comprising $N_x = N/X$ samples, so as to obtain pairs of sub-multiplets

$$\boldsymbol{h}_{m,i} = \left[ h_m\big((i-1)N_x\big), \dots, h_m(iN_x - 1) \right]$$

and

$$\boldsymbol{h}_{p,i} = \left[ h_p\big((i-1)N_x\big), \dots, h_p(iN_x - 1) \right],$$

where $i = \{1, \dots, X\}$,

- subtracting $k_0$ first samples from each sub-multiplet $\boldsymbol{h}_{m,i}$ and $k_0$ last samples from each sub-multiplet $\boldsymbol{h}_{p,i}$, where $k_0$ is a number of samples measured during a time it takes for the main antenna to reach a position of the predictor antenna, on the basis of said initial conjecture of the speed and of the acceleration of the vehicle,
- estimating an average speed for each pair of sub-multiplets $\boldsymbol{h}_{m,i}$ and $\boldsymbol{h}_{p,i}$ from which the $k_0$ first samples and the $k_0$ last samples have been respectively subtracted by maximizing a correlation between the sub-multiplets of this pair, so as to obtain a multiplet of speeds $\boldsymbol{v} = \{v_{i=1}, \dots, v_{i=X}\}$ representing estimated speeds for the samples numbered

$$k = \{N_x/2, 3N_x/2, \dots, (2X-1)N_x/2\},$$

and

- obtaining, from said multiplet of speeds $\boldsymbol{v}$, an estimated acceleration $a_{c,est}$ and an estimated speed $v_{0,est}$ of the vehicle, where $v_{0,est}$ is equal to an estimated speed of the vehicle at an instant of the measurement of the sample $k = 0$.

3. Channel prediction method according to Claim 1, **characterized in that** it comprises, for at least one pair of multiplets comprising a multiplet

$$\boldsymbol{h}_m = [h_m(0), \dots, h_m(N-1)]$$

of $N$ samples $h_m(k)$ measured at the main antenna, and a multiplet

$$\boldsymbol{h}_p = \left[ h_p(0), \dots, h_p(N-1) \right]$$

of $N$ samples $h_p(k)$ measured at the predictor antenna, the following steps:

- subtracting $k_0$ first samples measured at the main antenna and $k_0$ last samples measured at the predictor antenna, where $k_0$ is a number of samples measured during a time it takes for the main antenna to reach a position of the predictor antenna, on the basis of said initial conjecture of the speed and of the acceleration of the vehicle, so as to obtain multiplets of samples

$$\boldsymbol{h}'_m = [h_m(k_0), \dots, h_m(N-1)]$$

and

$$\boldsymbol{h}'_p = \left[ h_p(0), \dots, h_p(N-1-k_0) \right],$$

- choosing an integer $X > 1$, and subdividing each multiplet $\boldsymbol{h}'_m$ and $\boldsymbol{h}'_p$ into $X$ sub-multiplets of $N_x = (N - k_0)/X$ samples, so as to obtain pairs of sub-multiplets

$$\boldsymbol{h}'_{m,i} = [h_m(k_0 + (i-1)N_x), \dots, h_m(k_0 + iN_x - 1)]$$

and

$$\boldsymbol{h}'_{p,i} = \left[ h_p\big((i-1)N_x\big), \dots, h_p(iN_x - 1) \right],$$

where $i = \{1, \dots, X\}$,

- estimating, for each such pair of sub-multiplets $\boldsymbol{h}'_{m,i}$ and $\boldsymbol{h}'_{p,i}$, an average speed by maximizing a correlation between the sub-multiplets $\boldsymbol{h}'_{m,i}$ and $\boldsymbol{h}'_{p,i}$ of this pair, so as to obtain a series of estimated speeds $\boldsymbol{v} = \{v_{i=1}, \dots, v_{i=X}\}$ representing estimated speeds for the samples numbered

$$k = \{(k_0 + N_x)/2, (k_0 + 3N_x)/2, \dots, (k_0 + (2X-1)N_x)/2\},$$

- obtaining, from this series of estimated speeds v, an estimated acceleration $a_c = a_{c,est}$ and an estimated speed $v_{0,est}$ of the vehicle, and
- deducing therefrom an estimated speed

$$v_0 = v_{avg,init} + v_{0,est}$$

of the vehicle at an instant of the measurement of the sample $k = 0$, where $v_{avg,init}$ is an average speed conjectured over a time interval during which the $N$ samples are measured.

4. Channel prediction method according to Claim 1, **characterized in that** it comprises the following steps:

- calculating a time interval $\Delta^+(t)$ representing a time it will take for the main antenna to reach a location where the predictor antenna is located at an instant $t$,
- calculating a time interval $\Delta^-(t)$ representing a time elapsed since the predictor antenna was located at a location where the main antenna is located at the instant $t$,
- deducing therefrom shifts $\Delta_k^+(k)$ and $\Delta_k^-(k)$ in terms of numbers of samples $k$ corresponding respectively to $\Delta^+(t)$ and $\Delta^-(t)$,
- removing, in a multiplet of $N$ samples measured at the main antenna, samples with a number less than $k_0 = \Delta_k^+(0)$, - for various conjectured pairs $(v_0, a_c)$, determining, by way of the values of $\Delta^+(t)$, $\Delta^-(t)$, $\Delta_k^+(k)$ and $\Delta_k^-(k)$ which samples measured at the main antenna should be associated with which samples measured at the predictor antenna, and calculating an average correlation between a multiplet of samples measured at the main antenna and an associated multiplet of samples measured at the predictor antenna, and
- determining which pair $(v_0, a_c)$ maximizes said average correlation.

5. Network entity used in the prediction of a channel between a transceiver and a connected vehicle, said vehicle comprising at least one antenna, known as "main antenna", dedicated to exchanges of payload data with said transceiver, and at least one other antenna, known as "predictor antenna", placed in front of the main antenna, an estimate of the radio channel at a current position of the predictor antenna making it possible to predict the radio channel that the main antenna will be dealing with when the main antenna reaches the current position of the predictor antenna,
**characterized in that** it comprises means for:

- selecting, on the basis of an initial conjecture of a speed and of an acceleration of the vehicle, for a given multiplet of channel samples measured at the main antenna, a multiplet of channel samples measured at the predictor antenna, each sample of the predictor antenna being selected such that it corresponds to a given sample of the main antenna subsequently measured at the same position, assuming that the vehicle has moved at said speed and said acceleration of said initial conjecture,
- calculating a criterion associating said multiplet of samples measured at the main antenna with said multiplet of samples measured at the predictor antenna,
- determining a speed/acceleration pair that optimizes said criterion, and,
- in order to predict the radio channel between the transceiver and the main antenna, selecting samples of the predictor antenna by way of said determined speed/acceleration pair.

6. Network entity according to Claim 5, **characterized in that** it furthermore comprises, for at least one pair of multiplets comprising a multiplet

$$\boldsymbol{h}_m = [h_m(0), \dots, h_m(N-1)]$$

of $N$ samples $h_m(k)$ measured at the main antenna, and a multiplet

$$\boldsymbol{h}_p = \left[h_p(0), \dots, h_p(N-1)\right]$$

of $N$ samples $h_p(k)$ measured at the predictor antenna, means for:

- choosing an integer $X > 1$, and subdividing each multiplet $\boldsymbol{h}_m$ and $\boldsymbol{h}_p$ into $X$ sub-multiplets each comprising $N_x = N/X$ samples, so as to obtain pairs of sub-multiplets

$$\boldsymbol{h}_{m,i} = \left[h_m\big((i-1)N_x\big), \dots, h_m(iN_x - 1)\right]$$

and

$$\boldsymbol{h}_{p,i} = \left[h_p\big((i-1)N_x\big), \dots, h_p(iN_x - 1)\right],$$

where $i = \{1, \dots, X\}$,

- subtracting $k_0$ first samples from each sub-multiplet $\boldsymbol{h}_{m,i}$ and $k_0$ last samples from each sub-multiplet $\boldsymbol{h}_{p,i}$, where $k_0$ is a number of samples measured during a time it takes for the main antenna to reach a position of the predictor antenna, on the basis of said initial conjecture of the speed and of the acceleration of the vehicle,
- estimating an average speed for each pair of sub-multiplets $\boldsymbol{h}_{m,i}$ and $\boldsymbol{h}_{p,i}$ from which the $k_0$ first samples and the $k_0$ last samples have been respectively subtracted by maximizing a correlation between the sub-multiplets of this pair, so as to obtain a multiplet of speeds $\boldsymbol{v} = \{v_{i=1}, \dots, v_{i=X}\}$ representing estimated speeds for the samples numbered

$$k = \{N_x/2, 3N_x/2, \dots, (2X-1)N_x/2\},$$

and
- obtaining, from said multiplet of speeds $\boldsymbol{v}$, an estimated acceleration $a_{c,est}$ and an estimated speed $v_{0,est}$ of the vehicle, where $v_{0,est}$ is equal to an estimated speed of the vehicle at an instant of the measurement of the sample $k = 0$.

7. Network entity according to Claim 5, **characterized in that** it furthermore comprises, for at least one pair of multiplets comprising a multiplet

$$\boldsymbol{h}_m = [h_m(0), \dots, h_m(N-1)]$$

of $N$ samples $h_m(k)$ measured at the main antenna, and a multiplet

$$\boldsymbol{h}_p = \left[h_p(0), \dots, h_p(N-1)\right]$$

of $N$ samples $h_p(k)$ measured at the predictor antenna, means for:

- subtracting $k_0$ first samples measured at the main antenna and $k_0$ last samples measured at the predictor antenna, where $k_0$ is a number of samples measured during a time it takes for the main antenna to reach a position of the predictor antenna, on the basis of said initial conjecture of the speed and of the acceleration of the vehicle, so as to obtain multiplets of samples

$$\boldsymbol{h'}_m = [h_m(k_0), \dots, h_m(N-1)]$$

and

$$\boldsymbol{h'}_p = \left[h_p(0), \dots, h_p(N-1-k_0)\right],$$

- choosing an integer $X > 1$, and subdividing each multiplet $\boldsymbol{h'}_m$ and $\boldsymbol{h'}_p$ into $X$ sub-multiplets of $N_x = (N - k_0)/X$ samples, so as to obtain pairs of sub-multiplets

$$\boldsymbol{h'}_{m,i} = [h_m(k_0 + (i-1)N_x), \dots, h_m(k_0 + iN_x - 1)]$$

and

$$\boldsymbol{h'}_{p,i} = \left[h_p\big((i-1)N_x\big), \dots, h_p(iN_x - 1)\right],$$

where $i = \{1, \dots, X\}$,
- estimating, for each such pair of sub-multiplets $\boldsymbol{h'}_{m,i}$ and $\boldsymbol{h'}_{p,i}$, an average speed by maximizing a correlation between the sub-multiplets $\boldsymbol{h'}_{m,i}$ and $\boldsymbol{h'}_{p,i}$ of this pair, so as to obtain a series of estimated speeds $\boldsymbol{v} = \{v_{i=1}, \dots, v_{i=X}\}$ representing estimated speeds for the samples numbered

$$k = \{(k_0 + N_x)/2, (k_0 + 3N_x)/2, \dots, (k_0 + (2X-1)N_x)/2\},$$

- obtaining, from this series of estimated speeds v, an estimated acceleration $a_c = a_{c,est}$ and an estimated speed $v_{0,est}$ of the vehicle, and
- deducing therefrom an estimated speed

$$v_0 = v_{avg,init} + v_{0,est}$$

of the vehicle at an instant of the measurement of the sample $k = 0$, where $v_{avg,init}$ is an average speed conjectured over a time interval during which the $N$ samples are measured.

8. Network entity according to Claim 5, **characterized in that** it furthermore comprises means for:

- calculating a time interval $\Delta^+(t)$ representing a time it will take for the main antenna to reach a location where the predictor antenna is located at an instant $t$,
- calculating a time interval $\Delta^-(t)$ representing a time elapsed since the predictor antenna was located at a location where the main antenna is located at the instant $t$,
- deducing therefrom shifts $\Delta_k^+(k)$ and $\Delta_k^-(k)$ in terms of numbers of samples $k$ corresponding respectively to $\Delta^+(t)$ and $\Delta^-(t)$,
- removing, in a multiplet of $N$ samples measured at the main antenna, samples with a number less than $k_0 = \Delta_k^+(0)$, - for various conjectured pairs $(v_0, a_c)$, determining, by way of the values of $\Delta^+(t)$, $\Delta^-(t)$, $\Delta_k^+(k)$ and $\Delta_k^-(k)$, which samples measured at the main antenna should be associated with which samples measured at the predictor antenna, and calculating an average correlation between a multiplet of samples measured at the main antenna and an associated multiplet of samples measured at the predictor antenna, and
- determining which pair $(v_0, a_c)$ maximizes said average correlation.

9. Network entity according to any one of Claims 5 to 8, **characterized in that** it is hosted in a base station or in an MSC (Mobile Switching Centre) of a cellular communication network.

10. Communication network, **characterized in that** it comprises:

- at least one network entity according to any one of Claims 5 to 9, and
- at least one vehicle equipped with at least one main antenna and with at least one predictor antenna.

11. Irremovable, or partially or fully removable data storage means comprising computer program code instructions for executing the steps of a channel prediction method according to any one of Claims 1 to 4.

12. Computer program that is able to be downloaded from a communication network and/or is stored on a computer-readable medium and/or is able to be executed by a microprocessor, **characterized in that** it comprises instructions for executing the steps of a channel prediction method according to any one of Claims 1 to 4 when it is executed on a computer.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Y. SUI ; A. PAPADOGIANNIS ; T. SVENSSON.** The Potential of Moving Relays - A performance Analysis. *IEEE Vehicular Technology Conférence, Yokohama,* Mai 2012
- **M. STERNAD ; M. GRIEGER ; R. APELFRÖJD ; T. SVENSSON ; D. ARONSSON ; A. BELÉN MARTINEZ.** Using predictor antennas for long-range prédiction of fast fading for moving relays. *IEEE Wireless Communications and Networking Conférence, Paris,* Avril 2012
- **J. BJÖRSELL ; M. STERNAD ; M. GRIEGER.** Predictor Antennas in Action. *IEEE International Symposium on Personal, Indoor and Mobile Radio Communications, Montréal,* Octobre 2017